# EUROPÄISCHE PATENTSCHRIFT

(11) **EP 2 110 663 B1**
(45) Veröffentlichungstag und Bekanntmachung des Hinweises auf die Patenterteilung: **22.12.2010**
(21) Anmeldenummer: 09005405.7
(22) Anmeldetag: 16.04.2009
(51) Int. Cl.: G01N 30/46, G01N 33/00

(54) **Zwischen eindimensionalen und zweidimensionalen Betriebsarten umschaltbarer GC-MS-Analysator**
GC-MS analysis device which can be switched between single-dimensional and two-dimensional operating modes
Analyseur GC-MS commutable entre des types de fonctionnement unidimensionnel et bidimensionnel

(30) Priorität: 17.04.2008 JP 2008107892
(43) Veröffentlichungstag der Anmeldung: 21.10.2009
(73) Patentinhaber: GERSTEL K.K., Tokyo 152-0031 (JP)
(72) Erfinder: Ochiai, Nobuo, Tokyo 152-0031 (JP); Sasamoto, Kikuo, Tokyo 152-0031 (JP); Kanda, Hirooki, Tokyo 152-0031 (JP)
(74) Vertreter: Henseler, Daniela

(56) Entgegenhaltungen:
- EP-A- 0 597 602
- JP-A- 2006 064 646
- US-A1- 2007 031 974
- US-A1- 2007 039 375
- DIEHL J W ET AL: "Determination of aromatic hydrocarbons in gasolines by flow modulated comprehensive two-dimensional gas chromatography" JOURNAL OF CHROMATOGRAPHY, ELSEVIER SCIENCE PUBLISHERS B.V. AMSTERDAM, NL, Bd. 1080, Nr. 2, 8. Juli 2005 (2005-07-08), Seiten 157-165, XP004933393 ISSN: 0021-9673

## Beschreibung

### HINTERGRUND DER ERFINDUNG

### 1. Gebiet der Erfindung

Die vorliegende Erfindung bezieht sich auf einen Gaschromatographie-Massenspektrometrie-Analysator (GC-MS). Insbesondere bezieht sich die vorliegende Erfindung auf eine GC-MS-Vorrichtung, die eine Zielkomponente durch leichtes Umschalten eines Gaschromatographen (GC) zwischen einer eindimensionalen Betriebsart und einer zweidimensionalen Betriebsart identifizieren kann, ohne die Vorrichtungskonfiguration zu ändern. Die vorliegende Erfindung bezieht sich auch auf eine Vorrichtung, die eine Geruchskomponente durch leichtes Umschalten eines Gaschromatographen (GC) zwischen einer eindimensionalen Betriebsart und einer zweidimensionalen Betriebsart unter Verwendung von GC-MS und einer olfaktorischen Vorrichtung identifizieren kann, ohne die Vorrichtungskonfiguration zu ändern. Ferner kann die Vorrichtung als Vorrichtung zum Identifizieren von chemischen Substanzen allgemeinen Gebrauchs durch Ersetzen der olfaktorischen Vorrichtung durch einen anderen GC-Detektor unter Verwendung derselben Vorrichtungskonfiguration verwendet werden.

### 2. Beschreibung des Standes der Technik

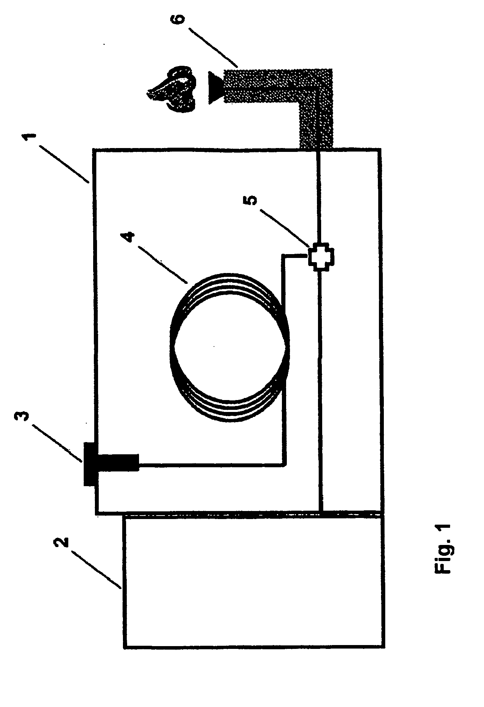

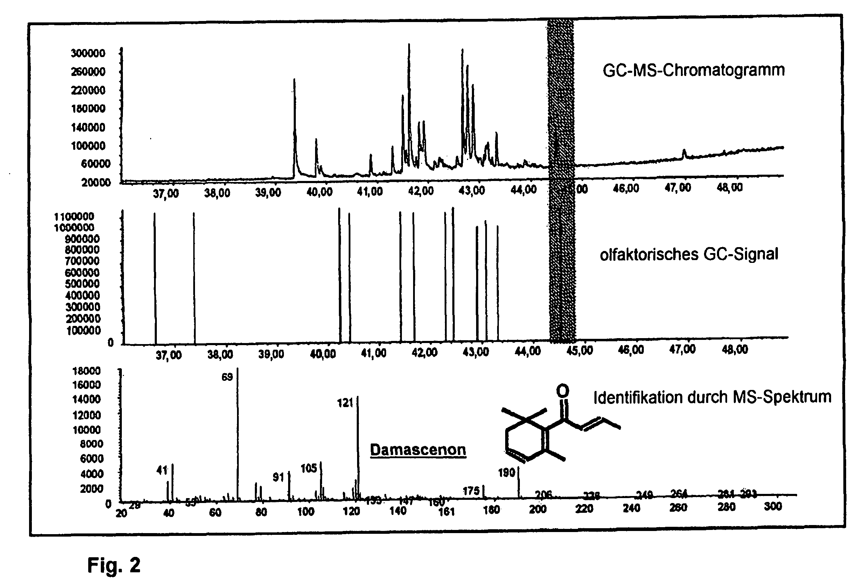

In den letzten Jahren haben Probleme in Bezug auf Sicherheits- und Gesundheitsauswirkungen von Nahrungsmitteln erhöhte Aufmerksamkeit auf sich gezogen und eindimensionale GC-MS-/olfaktorische Vorrichtungen wurden auf einer Vielfalt von Gebieten in Bezug auf Nahrungsmittel, Getränke, Parfums, Verpackungsbehälter, Kraftfahrzeuge und Kraftfahrzeugteile eingeführt. Bei einer solchen Analyse von Geruchskomponenten wird die Identifikation unter Verwendung von GC oder GC-MS und durch Durchführen der Analyse in Kombination mit einer olfaktorischen Vorrichtung (Catalogue for Introduction System for Thermal Desorption, GERSTEL Co., Seiten 16, 17), die am GC-Auslassabschnitt angebracht ist (eindimensionale GC-MS-/olfaktorische Analyse; siehe Fig. 1, Fig. 2), ausgeführt.

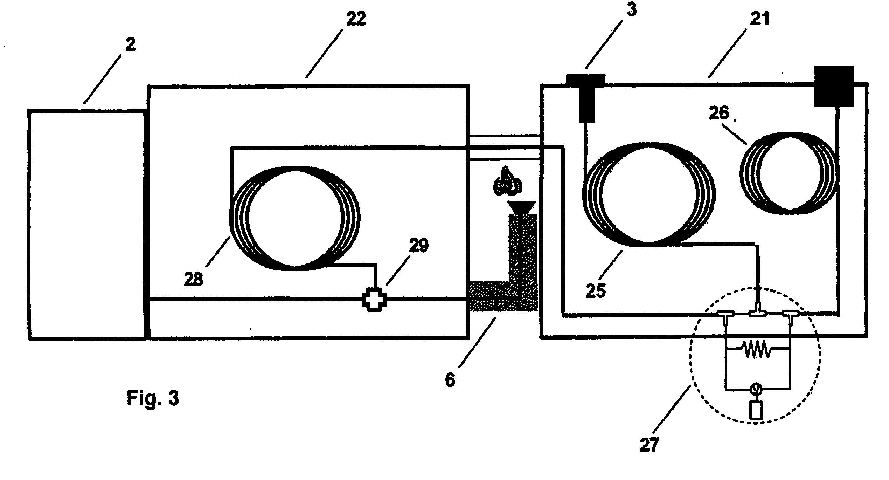

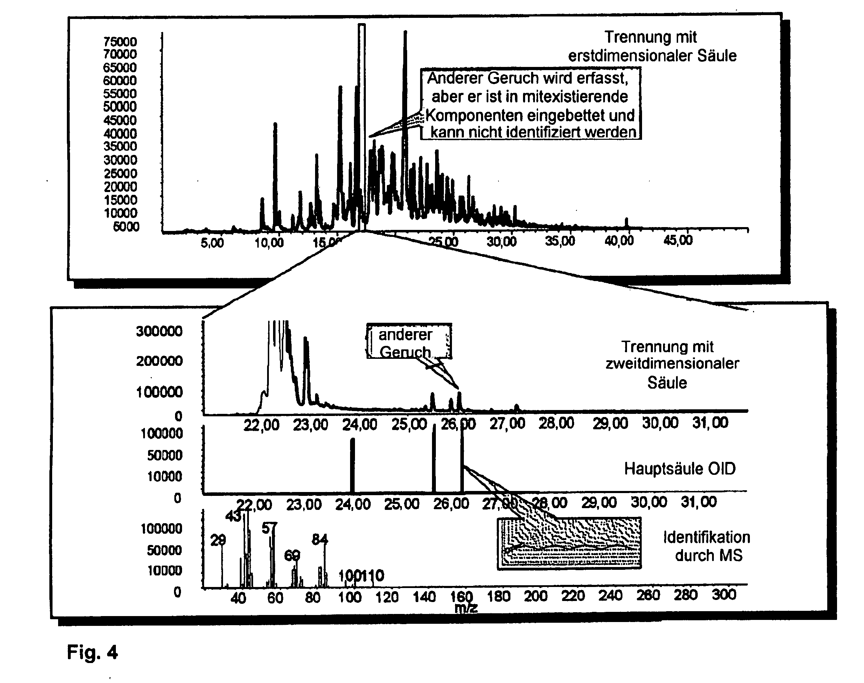

Die Anforderungen für eine solche Analyse werden jedoch strenger und Analyseverfahren, die für kleinere Mengen von Geruchskomponenten geeignet sind, sind erforderlich. Folglich ist die mit der eindimensionalen GC-MS-/olfaktorischen Vorrichtung allein erreichte Trennung unzureichend und der Bedarf für zweidimensionale GC-MS-/olfaktorische Vorrichtungen, die zum Trennen dieser Komponenten geeignet sind, hat zugenommen. Bei der zweidimensionalen Analyse wird eine zweidimensionale GC, bei der ein zweiter GC angeschlossen ist (Excellent Solution Catalogue, GERSTEL Co., Seiten 14, 15; Maruzen Co. "Gasu Kuro Jiyu Jizai (Reference to Gas Chromatography)", Seite 89), verwendet, wenn die Trennung mit einem GC unzureichend ist, und die Identifikationsanalyse wird durch Anbringen eines Massenspektrometers (MS) und dann einer olfaktorischen Vorrichtung am Auslass des zweiten GC in einer ähnlichen Weise durchgeführt (zweidimensionale GC-MS-/olfaktorische Analyse; siehe Fig. 3, Fig. 4).

Dieser eindimensionale GC-MS-/olfaktorische Analysator und diese zweidimensionale GC-MS-/olfaktorische Vorrichtung sind jedoch separate Vorrichtungen und zwei teure Systeme müssen zur Verfügung stehen, um die Analyse und Identifikation von Komponenten mit unzureichender Trennung durchzuführen.

Die Analyse unter Verwendung eines separaten zweidimensionalen GC-Systems muss auch in dem Fall durchgeführt werden, in dem die Trennung mit einem GC in einer anderen allgemeinen Analyse als einer Geruchsanalyse unzureichend ist.

Aus JP 2006-064646 A ist ein Analysator nach dem Oberbegriff der Ansprüche 1 und 5 bekannt. Aus US 2007/0039375 A1 ist ein mehrdimensionaler Gaschromatograph mit einem olfaktorischen Detektionsmittel bekannt.

Es ist eine Aufgabe der vorliegenden Erfindung, eine eindimensionale GC-Analyse und eine zweidimensionale GC-Analyse in einer GC-MS durch einen einfachen Umschaltvorgang durchzuführen, ohne die Vorrichtungskonfiguration zu ändern. Eine weitere Aufgabe besteht darin, die eindimensionale GC-MS-/olfaktorische Analyse und die zweidimensionale GC-MS-/olfaktorische Analyse in einer zweidimensionalen GC-MS-/olfaktorischen Vorrichtung durch einen einfachen Umschaltvorgang frei durchzuführen, ohne die Vorrichtungskonfiguration zu ändern. Noch eine weitere Aufgabe besteht darin, das Umschalten zwischen der eindimensionalen GC-Analyse und der zweidimensionalen GC-Analyse selbst in anderen Anwendungen als der Geruchsanalyse zu ermöglichen.

Die Erfinder haben festgestellt, dass die eindimensionale GC-MS-/olfaktorische Analyse und die zweidimensionale GC-MS-/olfaktorische Analyse durch einen einfachen Umschaltvorgang frei durchgeführt werden können, ohne die Vorrichtungskonfiguration zu ändern, indem ein Mechanismus eingegliedert wird, der eine spezielle Strömungskanalsteuerung in einer zweidimensionalen GC-MS-/olfaktorischen Vorrichtung durchführt. Ferner haben die Erfinder festgestellt, dass die eindimensionale GC-MS-Analyse und die zweidimensionale GC-MS-Analyse durchgeführt werden können, ohne die Vorrichtungskonfiguration zu ändern, indem ein Mechanismus eingegliedert wird, der eine spezielle Strömungskanalsteuerung in derselben Weise durchführt.

### ZUSAMMENFASSUNG DER ERFINDUNG

Die vorliegende Erfindung bezieht sich auf einen Geruchskomponentenanalysator mit: (a) einer Probeneinspritzöffnung, die mit einer Drucksteuervorrichtung ausgestattet ist; (b) einer erstdimensionalen GC-Säule, die mit der Probeneinspritzöffnung verbunden ist; (c) einem Dreiwege-Verbindungselement T₁₋₂, das mit der erstdimensionalen GC-Säule verbunden ist; (d) Dreiwege-Verbindungselementen T₁₋₁, T₁₋₃, die jeweils mit dem Dreiwege-Verbindungselement T₁₋₂ verbunden sind; (e) einem Magnetventil, das mit den Dreiwege-Verbindungselementen T₁₋₁, T₁₋₃ verbunden ist und zum Einstellen der Strömungskanäle der Dreiwege-Verbindungselemente T₁₋₁, T₁₋₃ dient; (f) einer ersten Drucksteuervorrichtung, die mit dem Magnetventil verbunden ist; (g) einem Dreiwege-Verbindungselement T₂₋₁, das mit dem Dreiwege-Verbindungselement T₁₋₃ verbunden ist; (h) einer zweiten Drucksteuervorrichtung, die mit dem Dreiwege-Verbindungselement T₂₋₁ verbunden ist; (i) einem Dreiwege-Verbindungselement T₂₋₂, das mit dem Dreiwege-Verbindungselement T₂₋₁ verbunden ist; (j) einem Dreiwege-Verbindungselement T₂₋₃, das mit dem Dreiwege-Verbindungselement T₂₋₂ verbunden ist; (k) einem Massenanalysator und einer olfaktorischen Vorrichtung, die jeweils mit dem Dreiwege-Verbindungselement T₂₋₃ verbunden sind; und (I) einer zweitdimensionalen GC-Säule, die mit dem Dreiwege-Verbindungselement T₁₋₁ und dem Dreiwege-Verbindungselement T₂₋₂ verbunden ist.

Die vorliegende Erfindung bezieht sich auch auf einen Geruchskomponentenanalysator mit: (a) einer Probeneinspritzöffnung, die mit einer Drucksteuervorrichtung ausgestattet ist; (b) einer erstdimensionalen GC-Säule, die mit der Probeneinspritzöffnung verbunden ist; (c) einem Dreiwege-Verbindungselement T₁₋₂, das mit der erstdimensionalen GC-Säule verbunden ist; (d) Dreiwege-Verbindungselementen T₁₋₁, T₁₋₃, die jeweils mit dem Dreiwege-Verbindungselement T₁₋₂ verbunden sind; (e) einem Magnetventil, das mit den Dreiwege-Verbindungselementen T₁₋₁, T₁₋₃ verbunden ist und zum Einstellen der Strömungskanäle der Dreiwege-Verbindungselemente T₁₋₁, T₁₋₃ dient; (f) einer Drucksteuervorrichtung FPR1, die mit dem Magnetventil verbunden ist; (g) einem Fünfwege-Verbindungselement, das mit dem Dreiwege-Verbindungselement T₁₋₃ verbunden ist; (h) einer Drucksteuervorrichtung FPR2, einer zweitdimensionalen GC-Säule, einem Massenanalysator und einer olfaktorischen Vorrichtung, die jeweils mit dem Fünfwege-Verbindungselement verbunden sind.

Die vorliegende Erfindung bezieht sich auch auf den vorstehend beschriebenen Geruchskomponentenanalysator, der ferner eine Vorrichtung zum Einstellen einer Temperatur nur eines erstdimensionalen Säulenabschnitts und/oder nur eines zweitdimensionalen Säulenabschnitts umfasst.

Die vorliegende Erfindung bezieht sich auch auf einen Analysator mit: (a) einer Probeneinspritzöffnung, die mit einer Drucksteuervorrichtung ausgestattet ist; (b) einer erstdimensionalen GC-Säule, die mit der Probeneinspritzöffnung verbunden ist; (c) einem Dreiwege-Verbindungselement T₁₋₂, das mit der erstdimensionalen GC-Säule verbunden ist; (d) Dreiwege-Verbindungselementen T₁₋₁, T₁₋₃, die jeweils mit dem Dreiwege-Verbindungselement T₁₋₂ verbunden sind; (e) einem Magnetventil, das mit den Dreiwege-Verbindungselementen T₁₋₁, T₁₋₃ verbunden ist und zum Einstellen der Strömungskanäle der Dreiwege-Verbindungselemente T₁₋₁, T₁₋₃ dient; (f) einer ersten Drucksteuervorrichtung, die mit dem Magnetventil verbunden ist; (g) einem Dreiwege-Verbindungselement T₂₋₁, das mit dem Dreiwege-Verbindungselement T₁₋₃ verbunden ist; (h) einer zweiten Drucksteuervorrichtung, die mit dem Dreiwege-Verbindungselement T₂₋₁, verbunden ist; (i) einem Dreiwege-Verbindungselement T₂₋₂, das mit dem Dreiwege-Verbindungselement T₂₋₁ verbunden ist; (j) einem Dreiwege-Verbindungselement T₂₋₃, das mit dem Dreiwege-Verbindungselement T₂₋₂ verbunden ist; (k) einem Massenanalysator und einem GC-Detektor, die jeweils mit dem Dreiwege-Verbindungselement T₂₋₃ verbunden sind; und (I) einer zweitdimensionalen GC-Säule, die mit dem Dreiwege-Verbindungselement T₁₋₁ und dem Dreiwege-Verbindungselement T₂₋₂ verbunden ist.

Die vorliegende Erfindung bezieht sich auch auf einen Analysator mit: (a) einer Probeneinspritzöffnung, die mit einer Drucksteuervorrichtung ausgestattet ist; (b) einer erstdimensionalen GC-Säule, die mit der Probeneinspritzöffnung verbunden ist; (c) einem Dreiwege-Verbindungselement T₁₋₂, das mit der erstdimensionalen GC-Säule verbunden ist; (d) Dreiwege-Verbindungselementen T₁₋₁, T₁₋₃, die jeweils mit dem Dreiwege-Verbindungselement T₁₋₂ verbunden sind; (e) einem Magnetventil, das mit den Dreiwege-Verbindungselementen T₁₋₁, T₁₋₃ verbunden ist und zum Einstellen der Strömungskanäle der Dreiwege-Verbindungselemente T₁₋₁, T₁₋₃ dient; (f) einer ersten Drucksteuervorrichtung, die mit dem Magnetventil verbunden ist; (g) einem Fünfwege-Verbindungselement, das mit dem Dreiwege-Verbindungselement T₁₋₃ verbunden ist; (h) einer zweiten Drucksteuervorrichtung, einer zweitdimensionalen GC-Säule, einem Massenanalysator und einem GC-Detektor, die jeweils mit dem Fünfwege-Verbindungselement verbunden sind.

Die vorliegende Erfindung bezieht sich auch auf den vorstehend beschriebenen Analysator, der ferner eine Vorrichtung zum Einstellen einer Temperatur nur eines erstdimensionalen Säulenabschnitts und/oder nur eines zweitdimensionalen Säulenabschnitts umfasst.

Die vorliegende Erfindung bezieht sich auch auf den vorstehend beschriebenen Analysator, wobei der GC-Detektor aus einer Gruppe ausgewählt ist, die aus einem FID, einem NPD, einem ECD, einem SCD, einem NCD, einem AED, einem FPD und einem PFPD besteht.

Die vorliegende Erfindung bezieht sich auch auf einen Analysator mit: (a) einer Probeneinspritzöffnung, die mit einer Drucksteuervorrichtung ausgestattet ist; (b) einer erstdimensionalen GC-Säule, die mit der Probeneinspritzöffnung verbunden ist; (c) einem Dreiwege-Verbindungselement T₁₋₂, das mit der erstdimensionalen GC-Säule verbunden ist; (d) Dreiwege-Verbindungselementen T₁₋₁, T₁₋₃, die jeweils mit dem Dreiwege-Verbindungselement T₁₋₂ verbunden sind; (e) einem Magnetventil, das mit den Dreiwege-Verbindungselementen T₁₋₁, T₁₋₃ verbunden ist und zum Einstellen der Strömungskanäle der Dreiwege-Verbindungselemente T₁₋₁, T₁₋₃ dient; (f) einer ersten Drucksteuervorrichtung, die mit dem Magnetventil verbunden ist; (g) einem Dreiwege-Verbindungselement T₂₋₁, das mit dem Dreiwege-Verbindungselement T₁₋₃ verbunden ist; (h) einer zweiten Drucksteuervorrichtung, die mit dem Dreiwege-Verbindungselement T₂₋₁ verbunden ist; (i) einem Dreiwege-Verbindungselement T₂₋₂, das mit dem Dreiwege-Verbindungselement T₂₋₁ verbunden ist; (j) einem Massenanalysator, der mit dem Dreiwege-Verbindungselement T₂₋₂ verbunden ist; und (k) einer zweitdimensionalen GC-Säule, die mit dem Dreiwege-Verbindungselement T₁₋₁ und dem Dreiwege-Verbindungselement T₂₋₂ verbunden ist.

Die vorliegende Erfindung bezieht sich auch auf die vorstehend beschriebene Geruchskomponentenanalyse, die ferner eine Vorrichtung zum Einstellen einer Temperatur nur eines erstdimensionalen Säulenabschnitts und/oder nur eines zweitdimensionalen Säulenabschnitts umfasst.

Gemäß der vorliegenden Erfindung können die eindimensionale GC-MS-/olfaktorische Analyse und die zweidimensionale GC-MS-/olfaktorische Analyse in einer zweidimensionalen GC-MS-/olfaktorischen Vorrichtung durch einen einfachen Umschaltvorgang frei durchgeführt werden, ohne die Vorrichtungskonfiguration zu ändern. Ferner kann gemäß der vorliegenden Erfindung eine andere Analyse als eine Geruchsanalyse durch Umschalten zwischen der eindimensionalen GC-Analyse und der zweidimensionalen GC-Analyse auch durchgeführt werden.

### KURZBESCHREIBUNG DER ZEICHNUNGEN

Fig. 1 stellt eine olfaktorische Vorrichtung unter Verwendung eines eindimensionalen Gaschromatographen-Massenspektrometer-Analysators dar; 1 bezieht sich auf den Gaschromatographen, 2 bezieht sich auf den Massenanalysator, 3 bezieht sich auf die Probeneinspritzöffnung, 4 bezieht sich auf die Säule, 5 bezieht sich auf den Teiler, 6 bezieht sich auf die olfaktorische Vorrichtung.
Fig. 2 zeigt ein Analysebeispiel, das unter Verwendung einer olfaktorischen Vorrichtung unter Verwendung eines eindimensionalen Gaschromatographen-Massenspektrometer-Analysators erhalten wird;
Fig. 3 stellt eine olfaktorische Vorrichtung unter Verwendung eines zweidimensionalen Gaschromatographen-Massenspektrometer-Analysators dar; 21 bezieht sich auf die erstdimensionale Gaschromatographie, 22 bezieht sich auf die zweitdimensionale Gaschromatographie, 25 bezieht sich auf die erstdimensionale GC-Säule, 26 bezieht sich auf ein Widerstandsrohr, 27 bezieht sich auf die Schaltvorrichtung der Strömung mittels DEANS, 28 bezieht sich auf die zweitdimensionale GC-Säule,
Fig. 4 zeigt ein Analysebeispiel in Bezug auf den Fall, in dem ein zweidimensionaler Chromatograph verwendet wird;
Fig. 5 stellt die Konfiguration gemäß der vorliegenden Erfindung dar;
Fig. 6 stellt den Betrieb gemäß der vorliegenden Erfindung dar;
Fig. 7 stellt den Betrieb gemäß der vorliegenden Erfindung dar;

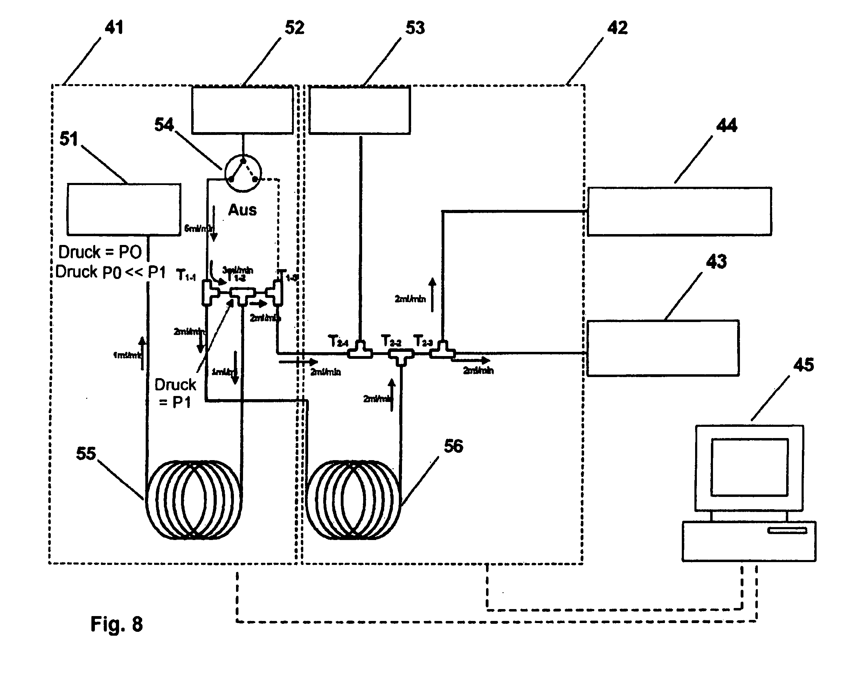

Fig. 8 stellt den Betrieb gemäß der vorliegenden Erfindung dar;
Fig. 9 stellt eine weitere Ausführungsform der vorliegenden Erfindung dar;
Fig. 10 stellt eine weitere Ausführungsform der vorliegenden Erfindung dar;
Fig. 11 stellt eine weitere Ausführungsform der vorliegenden Erfindung dar; und
Fig. 12 stellt eine weitere Ausführungsform der vorliegenden Erfindung dar.

### BESCHREIBUNG DER BEVORZUGTEN AUSFÜHRUNGSFORMEN

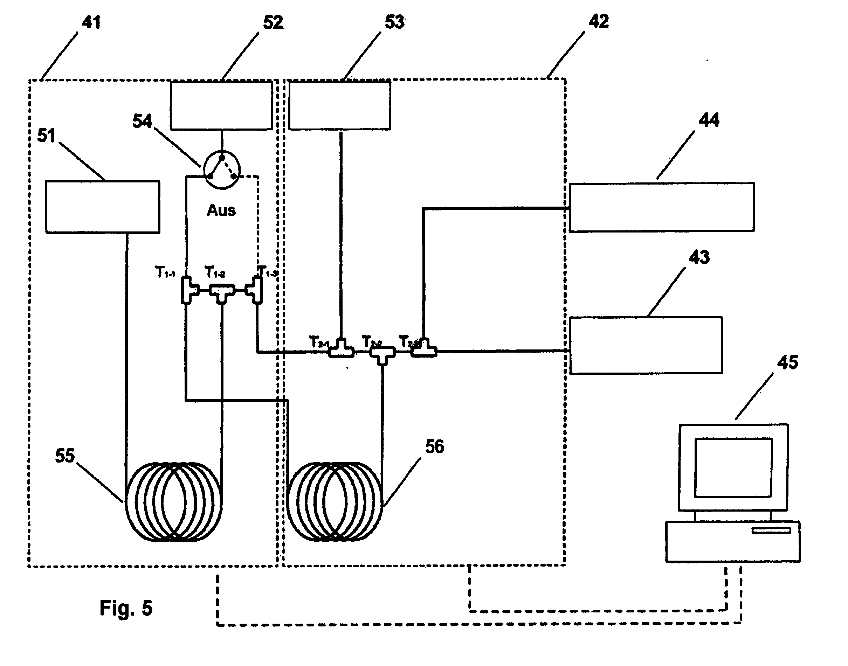

Die vorliegende Erfindung wird nachstehend mit Bezug auf die beigefügten Zeichnungen beschrieben. Fig. 5 zeigt eine schematische Konfiguration eines Geruchskomponentenanalysators gemäß der vorliegenden Erfindung. Mit Bezug auf Fig. 5 umfasst der Geruchskomponentenanalysator gemäß der vorliegenden Erfindung: (a) eine Probeneinspritzöffnung 51, die mit einer Drucksteuervorrichtung ausgestattet ist; (b) eine erstdimensionale GC-Säule 55, die mit der mit einer Drucksteuervorrichtung ausgestatteten Probeneinspritzöffnung 51 verbunden ist; (c) ein Dreiwege-Verbindungselement T₁₋₂, das mit der erstdimensionalen GC-Säule 55 verbunden ist; (d) Dreiwege-Verbindungselemente T₁₋₁, T₁₋₃, die jeweils mit dem Dreiwege-Verbindungselement T₁₋₂ verbunden sind; (e) ein Magnetventil 54, das mit den Dreiwege-Verbindungselementen T₁₋₁, T₁₋₃ verbunden ist; (f) eine Drucksteuervorrichtung 52, die mit dem Magnetventil 54 verbunden ist; (g) ein Dreiwege-Verbindungselement T₂₋₁, das mit dem Dreiwege-Verbindungselement T₁₋₃ verbunden ist; (h) eine Drucksteuervorrichtung 53, die mit dem Dreiwege-Verbindungselement T₂₋₁ verbunden ist; (i) ein Dreiwege-Verbindungselement T₂₋₂, das mit dem Dreiwege-Verbindungselement T₂₋₁ verbunden ist; (j) ein Dreiwege-Verbindungselement T₂₋₃, das mit dem Dreiwege-Verbindungselement T₂₋₂ verbunden ist; (k) einen Massenanalysator 43 und eine olfaktorische Vorrichtung 44, die jeweils mit dem Dreiwege-Verbindungselement T₂₋₃ verbunden sind; und (I) eine zweitdimensionale GC-Säule 56, die mit dem Dreiwege-Verbindungselement T₁₋₁ und dem Dreiwege-Verbindungselement T₂₋₂ verbunden ist. Die Probeneinspritzöffnung 51, die Drucksteuervorrichtung 52, das Magnetventil 54, die Dreiwege-Verbindungselemente T₁₋₁, T₁₋₂, T₁₋₃ und die erstdimensionale GC-Säule 55 bilden einen erstdimensionalen Gaschromatographen 41. Die Drucksteuervorrichtung 53, die Dreiwege-Verbindungselemente T₂₋₁, T₂₋₂, T₂₋₃ und die zweitdimensionale GC-Säule 56 bilden einen zweitdimensionalen Gaschromatographen 42. Der Geruchskomponentenanalysator gemäß der vorliegenden Erfindung ist durch einen Steuercomputer 45, der mit den Gaschromatographen 41 und 42 verbunden ist, konfiguriert.

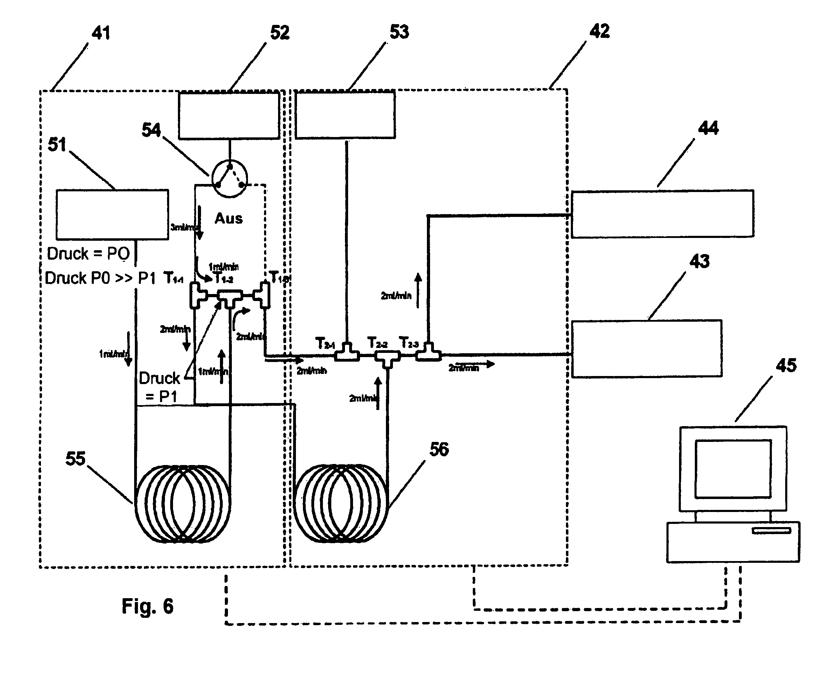

Der Betrieb des Geruchskomponentenanalysators gemäß der vorliegenden Erfindung wird nachstehend beschrieben. Zuerst wird ein Analyseverfahren auf der Basis nur einer erstdimensionalen GC-Säule beschrieben. Mit Bezug auf Fig. 6 wird eine Probe, die das Analyseobjekt ist, von einer Probeneinspritzöffnung 51, die mit einer Drucksteuervorrichtung ausgestattet ist, eingespritzt. Ein Druck P0 in der Probeneinspritzöffnung in diesem Fall wird höher gesetzt als ein Druck P1 im Dreiwege-Verbindungselement T₁₋₂. Die von der mit einer Drucksteuervorrichtung ausgestatteten Probeneinspritzöffnung 51 eingespritzte Probe wird in die erstdimensionale GC-Säule 55 eingeleitet, entsprechend der Verweilzeit (Retentionszeit) aufgetrennt, strömt durch das Dreiwege-Verbindungselement T₁₋₂ und wird in den zweitdimensionalen Gaschromatographen 42 über das Dreiwege-Verbindungselement T₁₋₃ eingeleitet. Der Schalter des Magnetventils 54 befindet sich im AUS-Zustand, ein Bewegungsphasengas (Trägergas), das von der Drucksteuervorrichtung 52 einströmt, strömt durch das Dreiwege-Verbindungselement T₁₋₁ und strömt bei der Trennung so, dass es in das Dreiwege-Verbindungselement T₁₋₂ und die zweitdimensionale GC-Säule 56 eingeleitet wird. Folglich wird die aus der erstdimensionalen GC-Säule 55 ausströmende Probe in das Dreiwege-Verbindungselement T₂₋₁ eingeleitet, ohne in die zweitdimensionale GC-Säule 56 eingeleitet zu werden. Die in der erstdimensionalen GC-Säule 55 aufgetrennte Probe wird aufgetrennt und über die Dreiwege-Verbindungselemente T₂₋₁, T₂₋₂, T₂₋₃ in den Massenanalysator 43 und die olfaktorische Vorrichtung 44 eingeleitet. Eine Massenanalyse wird im Massenanalysator 43 ausgeführt und gleichzeitig wird die Detektion einer Geruchssubstanz mit der olfaktorischen Vorrichtung 44 ausgeführt. Im Dreiwege-Verbindungselement T₂₋₂ wird das Bewegungsphasengas, das durch die zweitdimensionale GC-Säule 56 geströmt ist, vermischt, aber Probenkomponenten werden nicht dem Bewegungsphasengas beigemischt und erzeugen keine nachteilige Auswirkung auf die Detektion im Massenanalysator 43 und in der olfaktorischen Vorrichtung 44. Die Analyse unter Verwendung nur der erstdimensionalen GC-Säule wird folglich in der vorliegenden Vorrichtung ausgeführt.

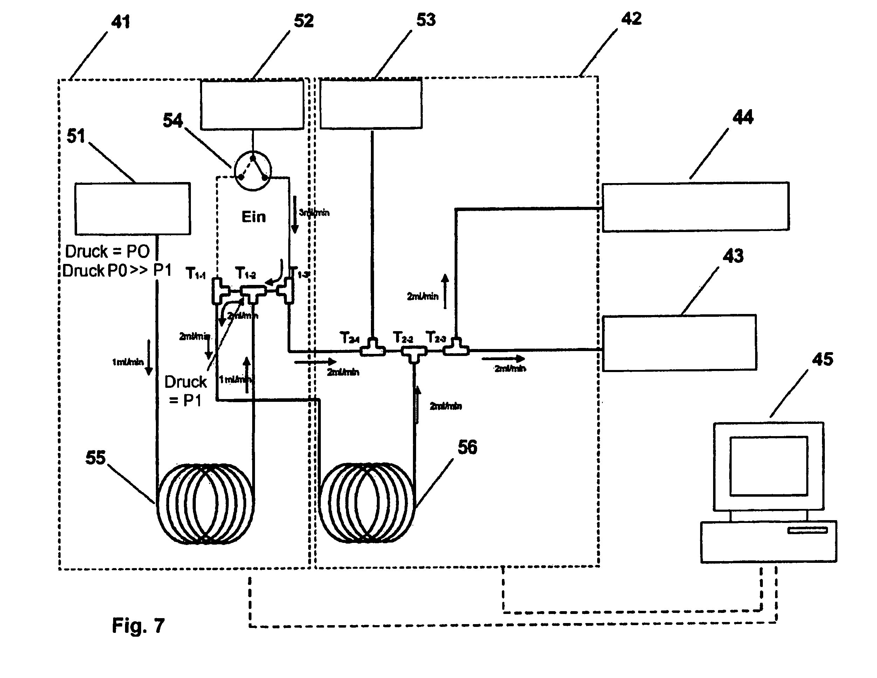

Das Analyseverfahren, das die zweitdimensionale GC-Säule zusätzlich zur erstdimensionalen GC-Säule verwendet, wird nachstehend beschrieben. Wenn verschiedene Gerüche erfasst werden, aber sie in eine gemeinsame Komponente eingebettet sind und bei der Trennung durch die erstdimensionale GC-Säule nicht identifiziert werden können, wie beispielsweise in Fig. 4 gezeigt, wird die Zielprobe unter Verwendung der erstdimensionalen GC-Säule aufgetrennt und der aufgetrennte Probenteil wird dann in die zweitdimensionale GC-Säule eingeleitet. Wie in Fig. 6 gezeigt, wird folglich zuerst die Probe mit der erstdimensionalen GC-Säule 55 aufgetrennt. Wenn die Verweilzeit eines Teils, für den ein anderer Geruch in der früheren Analyse erfasst wurde, erreicht ist, wird dann das Magnetventil 54 auf EIN umgeschaltet, wie in Fig. 7 gezeigt. Als Ergebnis wird das von der Drucksteuervorrichtung 52 gelieferte Bewegungsphasengas in das Dreiwege-Verbindungselement T₁₋₃ eingeleitet und das Bewegungsphasengas, das die Zielprobenkomponente enthält und von der erstdimensionalen GC-Säule 55 geliefert wird, wird in das Dreiwege-Verbindungselement T₁₋₂ eingeleitet, mit dem vom Dreiwege-Verbindungselement T₁₋₃ eingeleiteten Bewegungsphasengas vermischt und zum Dreiwege-Verbindungselement T₁₋₁ geliefert. In diesem Fall wird ein Teil des Bewegungsphasengases, das von der Drucksteuervorrichtung 52 zum Dreiwege-Verbindungselement T₁₋₃ geliefert wird, in das Dreiwege-Verbindungselement T₁₋₂ eingeleitet und das restliche Bewegungsphasengas wird in das Dreiwege-Verbindungselement T₂₋₁ eingeleitet. Das aus dem Dreiwege-Verbindungselement T₁₋₁ austretende Probengas wird in die zweitdimensionale GC-Säule 56 eingeleitet, in Komponenten aufgetrennt und in das Dreiwege-Verbindungselement T₂₋₂ eingeleitet. Im Dreiwege-Verbindungselement T₂₋₂ werden das vom Dreiwege-Verbindungselement T₁₋₃ gelieferte Bewegungsphasengas und das Probengas gemischt und das Gemisch wird über das Dreiwege-Verbindungselement T₂₋₃ in den Massenanalysator 43 und die olfaktorische Vorrichtung 44 geliefert. Wie in Fig. 4 gezeigt, können die Geruchskomponenten folglich unter Verwendung der zweitdimensionalen Säule identifiziert werden. Sobald die Einleitung der Probenkomponente in die zweitdimensionale GC-Säule 56 vollendet wurde, wird das Magnetventil 54 wieder AUS-geschaltet und gleichzeitig wird der Druck **P0** der mit einer Drucksteuervorrichtung ausgestatteten Probeneinspritzöffnung 51 niedriger gemacht als der Druck P1 des Dreiwege-Verbindungselements T₁₋₂. Als Ergebnis werden andere Probenkomponenten, die in der erstdimensionalen GC-Säule 55 verbleiben, zur Probeneinspritzöffnung 51, die mit einer Drucksteuervorrichtung ausgestattet ist, zurückgeführt und abgeführt. Folglich kann verhindert werden, dass die anderen Komponenten, die nicht die Zielkomponente sind, in den Massenanalysator 43 und die olfaktorische Vorrichtung 44 eingeleitet werden. Diese Betätigungen des Ventils und der Drucksteuervorrichtung können mit einem Steuercomputer 45 gesteuert werden.

Unter Verwendung einer Vorrichtung ist es somit möglich, eine eindimensionale GC-Geruchsanalyse und eine zweidimensionale GC-Geruchsanalyse durch einen einfachen Umschaltvorgang durchzuführen, ohne die Vorrichtungskonfiguration zu ändern.

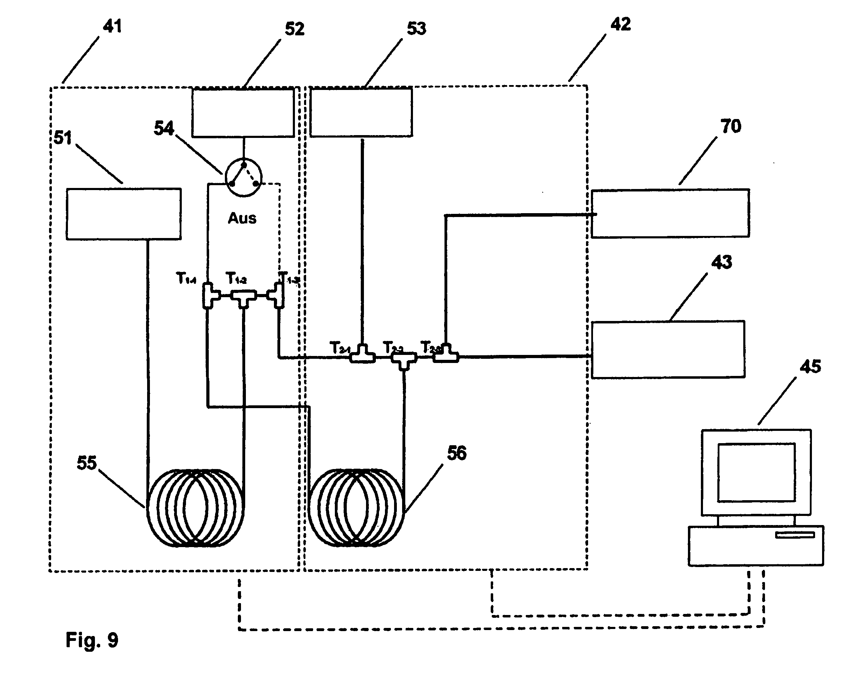

Eine weitere Ausführungsform der vorliegenden Erfindung wird nachstehend beschrieben. In dieser Ausführungsform der vorliegenden Erfindung ist ein GC-Detektor 70 anstelle der olfaktorischen Vorrichtung 44, die in Fig. 6 gezeigt ist, angeschlossen (siehe Fig. 9). Der Betrieb der in Fig. 9 gezeigten anderen Vorrichtungen als des GC-Detektors 70 ist identisch zu jenem der in Fig. 6 gezeigten Vorrichtungen und auf dessen Erläuterung wird verzichtet. In der vorliegenden Vorrichtung kann der GC-Detektor 70 eine GC-Detektion zusammen mit dem Massenanalysator 43 in Bezug auf die Probe, die nur unter Verwendung der erstdimensionalen GC-Säule 55 aufgetrennt wird, durchführen. Sobald das Magnetventil 54 umgeschaltet ist, kann der Detektor ferner auch die GC-Detektion zusammen mit dem Massenanalysator 43 in Bezug auf die Probe, die einer zusätzlichen Auftrennung unterzogen wird, in Bezug auf eine Probe mit speziellen Komponenten durch die zweitdimensionale GC-Säule 56 durchführen.

Die Detektionseinheit im GC-Detektor 70 ist nicht besonders begrenzt und Beispiele von geeigneten Detektoren umfassen einen FID (Wasserstoffflammenionisations-Detektor), einen NPD (Stickstoff-Phosphor-Detektor), einen ECD (Elektroneneinfang-Detektor), einen SCD (Schwefelflammen-Chemolumineszenz-Detektor), einen NCD (Stickstoffflammen-Chemolumineszenz-Detektor), einen AED (Atomemissions-Detektor), einen FPD (Flammenphotometer-Detektor) und einen PFPD (gepulsten Flammenphotometer-Detektor).

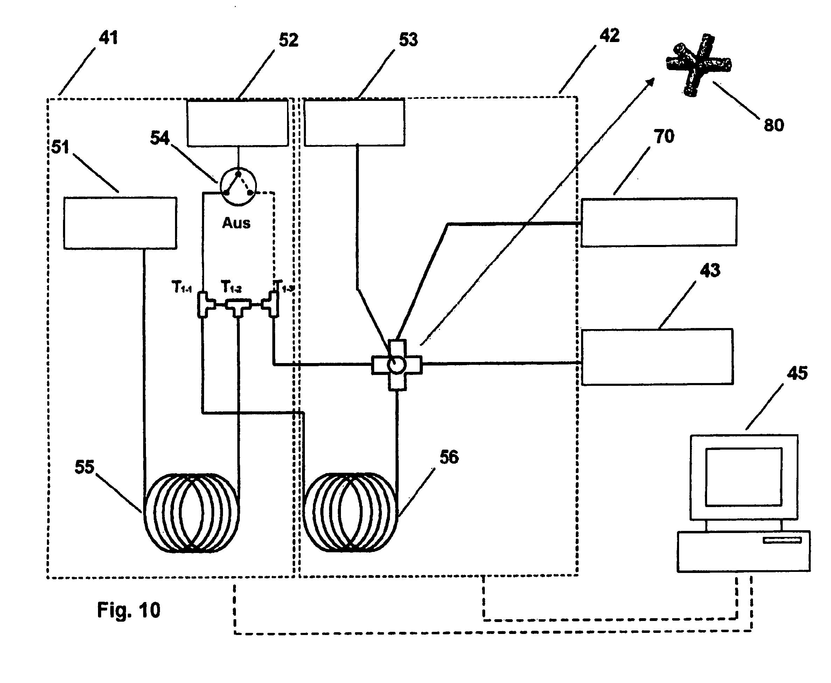

Nachstehend wird eine nochmals weitere Ausführungsform der Vorrichtung gemäß der vorliegenden Erfindung beschrieben. Fig. 10 zeigt ein Beispiel des Analysators gemäß der vorliegenden Erfindung, in dem ein Fünfwege-Verbindungselement 80 anstelle der Dreiwege-Verbindungselemente T₂₋₁, T₂₋₂, T₂₋₃, die in Fig. 9 gezeigt sind, verwendet wird. Das Austauschen von drei Verbindungselementen gegen das Fünfwege-Verbindungselement 80 macht es möglich, die Vorrichtung zu vereinfachen. Ein Geruchsanalysator kann unter Verwendung der in Fig. 6 gezeigten olfaktorischen Vorrichtung 44 anstelle des in Fig. 10 gezeigten GC-Detektors 70 erhalten werden.

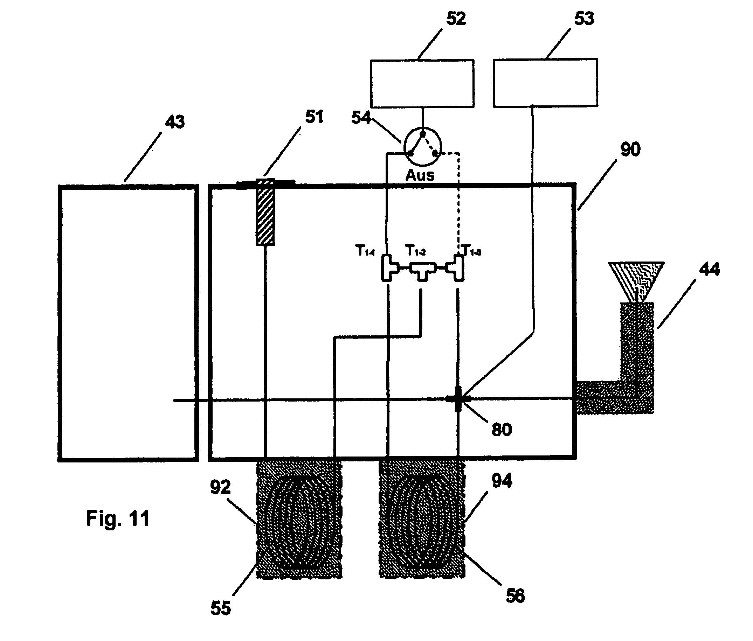

Nachstehend wird eine nochmals weitere Ausführungsform der vorliegenden Erfindung mit Bezug auf Fig. 11 beschrieben. Im Gegensatz zu der in Fig. 6 gezeigten Konfiguration stehen die erstdimensionale GC-Säule 55 und die zweitdimensionale GC-Säule 56 von einer Strömungskanalsteuereinheit 90 vor und die Temperatur wird mit Säulenheizvorrichtungen 92 bzw. 94 geregelt. Im Gegensatz zu der in Fig. 6 gezeigten Konfiguration wird ferner ein Fünfwege-Verbindungselement 80 anstelle der Dreiwege-Verbindungselemente T₂₋₁, T₂₋₂, T₂₋₃ verwendet. Mit einer solchen Konfiguration kann eine einfache Vorrichtung erhalten werden.

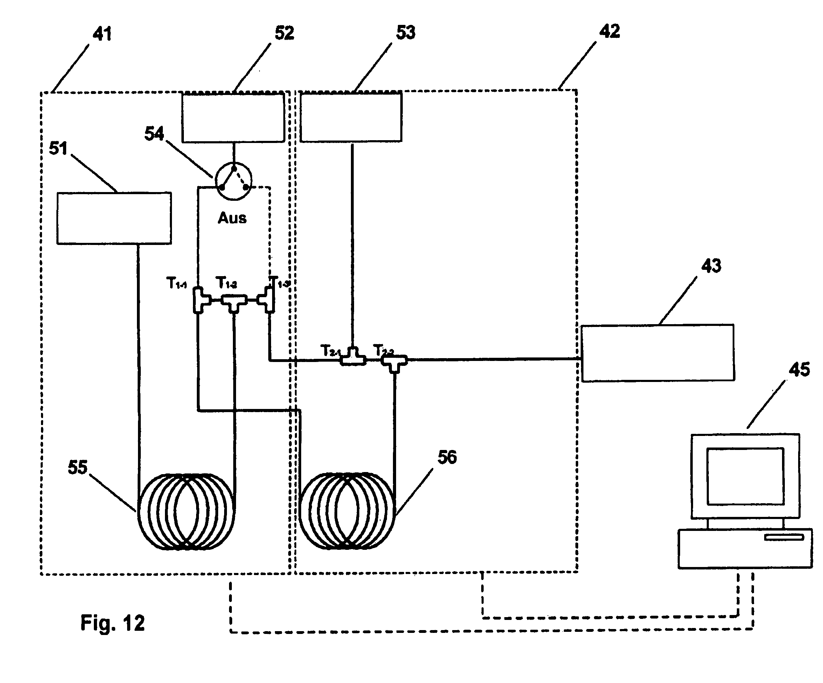

Nachstehend wird eine nochmals weitere Ausführungsform der Vorrichtung gemäß der vorliegenden Erfindung beschrieben. Fig. 12 zeigt schematisch den Analysator gemäß der vorliegenden Erfindung. Mit Bezug auf Fig. 12 umfasst der Analysator gemäß der vorliegenden Erfindung: (a) eine Probeneinspritzöffnung 51, die mit einer Drucksteuervorrichtung ausgestattet ist; (b) eine erstdimensionale GC-Säule 55, die mit der mit einer Drucksteuervorrichtung ausgestatteten Probeneinspritzöffnung 51 verbunden ist; (c) ein Dreiwege-Verbindungselement T₁₋₂, das mit der erstdimensionalen GC-Säule 55 verbunden ist; (d) Dreiwege-Verbindungselemente T₁₋₁, T₁₋₃, die jeweils mit dem Dreiwege-Verbindungselement T₁₋₂ verbunden sind; (e) ein Magnetventil 54, das mit den Dreiwege-Verbindungselementen T₁₋₁, T₁₋₃ verbunden ist; (f) eine Drucksteuervorrichtung 52, die mit dem Magnetventil 54 verbunden ist; (g) ein Dreiwege-Verbindungselement T₂₋₁, das mit dem Dreiwege-Verbindungselement T₁₋₃ verbunden ist; (h) eine Drucksteuervorrichtung 53, die mit dem Dreiwege-Verbindungselement T₂₋₁ verbunden ist; (i) ein Dreiwege-Verbindungselement T₂₋₂, das mit dem Dreiwege-Verbindungselement T₂₋₁ verbunden ist; (j) einen Massenanalysator 43, der mit dem Dreiwege-Verbindungselement T₂₋₂ verbunden ist; und (k) eine zweitdimensionale GC-Säule 56, die mit dem Dreiwege-Verbindungselement T₁₋₁ und dem Dreiwege-Verbindungselement T₂₋₂ verbunden ist. Die Probeneinspritzöffnung 51, die Drucksteuervorrichtung 52, das Magnetventil 54, die Dreiwege-Verbindungselemente T₁₋₁, T₁₋₂, T₁₋₃ und die erstdimensionale GC-Säule 55 bilden einen erstdimensionalen Gaschromatographen 41. Die Drucksteuervorrichtung 53, die Dreiwege-Verbindungselemente T₂₋₁, T₂₋₂ und T₂₋₃ und die zweitdimensionale GC-Säule 56 bilden einen zweitdimensionalen Gaschromatographen 42. Der Geruchskomponentenanalysator gemäß der vorliegenden Erfindung ist durch einen Steuercomputer 45, der mit den Gaschromatographen 41 und 42 verbunden ist, konfiguriert.

Der Betrieb des Analysators gemäß der vorliegenden Erfindung wird nachstehend beschrieben. Zuerst wird ein Analyseverfahren auf der Basis nur einer erstdimensionalen GC-Säule beschrieben. Mit Bezug auf Fig. 12 wird eine Probe, die das Analyseobjekt ist, von einer Probeneinspritzöffnung 51, die mit einer Drucksteuervorrichtung ausgestattet ist, eingespritzt. Ein Druck PO in der Probeneinspritzöffnung in diesem Fall wird höher gesetzt als ein Druck P1 im Dreiwege-Verbindungselement T₁₋₂. Die von der mit einer Drucksteuervorrichtung ausgestatteten Probeneinspritzöffnung eingespritzte Probe wird in die erstdimensionale GC-Säule eingeleitet, entsprechend der Verweilzeit aufgetrennt, strömt durch das Dreiwege-Verbindungselement T₁₋₂ und wird in den zweitdimensionalen Gaschromatographen 42 über das Dreiwege-Verbindungselement T₁₋₃ eingeleitet. Der Schalter des Magnetventils 54 befindet sich im AUS-Zustand, ein Bewegungsphasengas, das von der Drucksteuervorrichtung 52 einströmt, strömt durch das Dreiwege-Verbindungselement T₁₋₁ und strömt bei der Trennung so, dass es in das Dreiwege-Verbindungselement T₁₋₂ und die zweitdimensionale GC-Säule 56 eingeleitet wird. Folglich wird die aus der erstdimensionalen GC-Säule 55 ausströmende Probe in das Dreiwege-Verbindungselement T₂₋₁ eingeleitet, ohne in die zweitdimensionale GC-Säule 56 eingeleitet zu werden. Die in der erstdimensionalen GC-Säule 55 aufgetrennte Probe wird aufgetrennt und über die Dreiwege-Verbindungselemente T₂₋₁, T₂₋₂ in den Massenanalysator 43 eingeleitet. Eine Massenanalyse wird im Massenanalysator 43 ausgeführt. Im Dreiwege-Verbindungselement T₂₋₂ wird das Bewegungsphasengas, das durch die zweitdimensionale GC-Säule 56 geströmt ist, vermischt, aber Probenkomponenten werden nicht dem Bewegungsphasengas beigemischt und erzeugen keine nachteilige Auswirkung auf die Detektion im Massenanalysator 43. Die Analyse unter Verwendung nur der erstdimensionalen GC-Säule wird folglich in der vorliegenden Vorrichtung ausgeführt.

Das Analyseverfahren, das die zweitdimensionale GC-Säule zusätzlich zur erstdimensionalen GC-Säule verwendet, wird nachstehend beschrieben. Wenn die Anzahl von miteinander existierenden Komponenten groß ist und sie nicht durch die Trennung mit der erstdimensionalen GC-Säule identifiziert werden können, wird die Zielprobe unter Verwendung der erstdimensionalen GC-Säule aufgetrennt und der aufgetrennte Probenteil wird dann in die zweitdimensionale GC-Säule eingeleitet. Wie in Fig. 12 gezeigt, wird folglich zuerst die Probe mit der erstdimensionalen GC-Säule 55 aufgetrennt. Wenn die Verweilzeit eines mitexistierenden Teils der früheren Analyse erreicht ist, wird dann das Magnetventil 54 auf EIN umgeschaltet. Folglich wird das von der Drucksteuervorrichtung 52 gelieferte Bewegungsphasengas in das Dreiwege-Verbindungselement T₁₋₃ eingeleitet und das Bewegungsphasengas, das die Zielprobenkomponente enthält und von der erstdimensionalen GC-Säule 55 geliefert wird, wird in das Dreiwege-Verbindungselement T₁₋₂ eingeleitet, mit dem vom Dreiwege-Verbindungselement T₁₋₃ eingeleiteten Bewegungsphasengas vermischt und zum Dreiwege-Verbindungselement T₁₋₁ geliefert. In diesem Fall wird ein Teil des Bewegungsphasengases, das von der Drucksteuervorrichtung 52 zum Dreiwege-Verbindungselement T₁₋₃ geliefert wird, in das Dreiwege-Verbindungselement T₁₋₂ eingeleitet und das restliche Bewegungsphasengas wird in das Dreiwege-Verbindungselement T₂₋₁, eingeleitet. Das aus dem Dreiwege-Verbindungselement T₁₋₁ austretende Probengas wird in die zweitdimensionale GC-Säule 56 eingeleitet, in Komponenten aufgetrennt und in das Dreiwege-Verbindungselement T₂₋₂ eingeleitet. Im Dreiwege-Verbindungselement T₂₋₂ werden das vom Dreiwege-Verbindungselement T₁₋₃ gelieferte Bewegungsphasengas und das Probengas gemischt und das Gemisch wird in den Massenanalysator 43 geliefert. Folglich kann die Zielkomponente unter Verwendung der zweitdimensionalen Säule identifiziert werden. Sobald die Einleitung der Probenkomponente in die zweitdimensionale GC-Säule 56 vollendet wurde, wird das Magnetventil 54 wieder AUS-geschaltet und gleichzeitig wird der Druck P0 der mit einer Drucksteuervorrichtung ausgestatteten Probeneinspritzöffnung 51 niedriger gemacht als der Druck P1 des Dreiwege-Verbindungselements T₁₋₂-Folglich werden andere Probenkomponenten, die in der erstdimensionalen GC-Säule 55 verbleiben, zur Probeneinspritzöffnung 51, die mit einer Drucksteuervorrichtung ausgestattet ist, zurückgeführt und abgeführt. Folglich kann verhindert werden, dass die anderen Komponenten, die nicht die Zielkomponente sind, in den Massenanalysator 43 strömen. Diese Betätigungen des Ventils und der Drucksteuervorrichtung können mit einem Steuercomputer 45 gesteuert werden.

Unter Verwendung einer Vorrichtung ist es somit möglich, eine eindimensionale GC-Analyse und eine zweidimensionale GC-Analyse durch einen einfachen Umschaltvorgang durchzuführen, ohne die Vorrichtungskonfiguration zu ändern.

Gemäß der vorliegenden Erfindung werden eine eindimensionale GC-MS-/olfaktorische Analyse und eine zweidimensionale GC-MS-/olfaktorische Analyse in einer zweidimensionalen GC-MS-/olfaktorischen Vorrichtung durch einen einfachen Umschaltvorgang frei durchgeführt, ohne die Vorrichtungskonfiguration zu ändern. Ferner können gemäß der vorliegenden Erfindung die eindimensionale GC-Analyse und die zweidimensionale GC-Analyse durch Umschalten in anderen Anwendungen als der Geruchsanalyse durchgeführt werden.

Somit schafft die Erfindung einen Analysator mit:
(a) einer Probeneinspritzöffnung 51, die mit einer Drucksteuervorrichtung ausgestattet ist;
(b) einer erstdimensionalen GC-Säule 55, die mit der Probeneinspritzöffnung 51 verbunden ist;
(c) einem ersten Dreiwege-Verbindungselement T₁₋₂, das mit der erstdimensionalen GC-Säule 55 verbunden ist;
(d) zweiten und dritten Dreiwege-Verbindungselementen T₁₋₁, T₁₋₃, die jeweils mit dem ersten Dreiwege-Verbindungselement T₁₋₂ verbunden sind;
(e) einem Magnetventil 54, das mit den zweiten und dritten Dreiwege-Verbindungselementen T₁₋₁, T₁₋₃ verbunden ist und zum Einstellen der Strömungskanäle der zweiten und dritten Dreiwege-Verbindungselemente T₁₋₁, T₁₋₃ dient;
(f) einer ersten Drucksteuervorrichtung 52, die mit dem Magnetventil 54 verbunden ist;
(g) einem vierten Dreiwege-Verbindungselement T₂₋₁, das mit dem dritten Dreiwege-Verbindungselement T₁₋₃ verbunden ist;
(h) einer zweiten Drucksteuervorrichtung 53, die mit dem vierten Dreiwege-Verbindungselement T₂₋₁ verbunden ist;
(i) einem fünften Dreiwege-Verbindungselement T₂₋₂, das mit dem vierten Dreiwege-Verbindungselement T₂₋₁ verbunden ist
(j) einem sechsten Dreiwege-Verbindungselement T₂₋₃, das mit dem fünften Dreiwege-Verbindungselement T₂₋₂ verbunden ist;
(k) einem Massenanalysator 43 und einer olfaktorischen Vorrichtung 44 und/oder einem GC-Detektor 70, die jeweils mit dem sechsten Dreiwege-Verbindungselement T₂₋₃ verbunden sind; und
(l) einer zweitdimensionalen GC-Säule 56, die mit dem zweiten Dreiwege-Verbindungselement T₁₋₁ und dem fünften Dreiwege-Verbindungselement T₂₋₂ verbunden ist.

Zum Bereitstellen der Strömungskanäle sind zweckmäßigerweise Dreiwege-Verbindungselemente vorgesehen, es versteht sich jedoch, dass neben Dreiwege-Verbindungselementen jede Armatur bzw. mehrere Armaturen Einsatz finden kann, die eine derartige Verbindung der Komponenten ermöglicht, die mindestens drei angrenzende Kanäle verbindet, die wahlweise geschlossen bzw. geöffnet werden können.

## Patentansprüche

1. Analysator, mit:
(a) einer Probeneinspritzöffnung (51), die mit einer ersten Drucksteuervorrichtung ausgestattet ist;
(b) einer erstdimensionalen GC-Säule (55), die mit der Probeneinspritzöffnung (51) verbunden ist;
(c) einem Dreiwege-Verbindungselement T₁₋₂, das mit der erstdimensionalen GC-Säule (55) verbunden ist;
(d) Dreiwege-Verbindungselementen T₁₋₁, T₁₋₃, die jeweils mit dem Dreiwege-Verbindungselement T₁₋₂ verbunden sind;
(e) einem Magnetventil (54), das mit den Dreiwege-Verbindungselementen T₁₋₁, T₁₋₃ verbunden ist und zum Einstellen der Strömungskanäle der Dreiwege-Verbindungselemente T₁₋₁, T₁₋₃ dient; und
(f) einer zweiten Drucksteuervorrichtung (52), die mit dem Magnetventil (54) verbunden ist;
**dadurch gekennzeichnet, dass**
(g) ein Dreiwege-Verbindungselement T₂₋₁ mit dem Dreiwege-Verbindungselement T₁₋₃ verbunden ist;
(h) eine dritte Drucksteuervorrichtung (53) mit dem Dreiwege-Verbindungselement T₂₋₁ verbunden ist;
(i) ein Dreiwege-Verbindungselement T₂₋₂ mit dem Dreiwege-Verbindungselement T₂₋₁ verbunden ist;
(j) ein Massenanalysator (43) mit dem Dreiwege-Verbindungselement T₂₋₂ verbunden ist; und
(k) eine zweitdimensionale GC-Säule (56) mit dem Dreiwege-Verbindungselement T₁₋₁ und dem Dreiwege-Verbindungselement T₂₋₂ verbunden ist.

2. Analysator nach Anspruch 1, welcher ferner eine Vorrichtung (92, 94) zum Einstellen einer Temperatur nur eines erstdimensionalen Säulenabschnitts und/oder nur eines zweitdimensionalen Säulenabschnitts umfasst.

3. Analysator nach Anspruch 1,
**dadurch gekennzeichnet, dass**
der Analysator ein Geruchskomponentenanalysator ist, und
(l) ein Dreiwege-Verbindungselement T₂₋₃ zwischen dem Dreiwege-Verbindungselement T₂₋₂ und dem Massenanalysator (43) angeordnet ist; und
(m) der Massenanalysator (43) und eine olfaktorische Vorrichtung (44) jeweils mit dem Dreiwege-Verbindungselement T₂₋₃ verbunden sind.

4. Analysator nach Anspruch 1,
**dadurch gekennzeichnet, dass**
(l) ein Dreiwege-Verbindungselement T₂₋₃ zwischen dem Dreiwege-Verbindungselement T₂₋₂ und dem Massenanalysator (43) angeordnet ist; und
(m) der Massenanalysator (43) und ein GC-Detektor (70) jeweils mit dem Dreiwege-Verbindungselement T₂₋₃ verbunden sind.

5. Analysator, mit:
(a) einer Probeneinspritzöffnung (51), die mit einer ersten Drucksteuervorrichtung ausgestattet ist;
(b) einer erstdimensionalen GC-Säule (55), die mit der Probeneinspritzöffnung (51) verbunden ist;
(c) einem Dreiwege-Verbindungselement T₁₋₂, das mit der erstdimensionalen GC-Säule (55) verbunden ist;
(d) Dreiwege-Verbindungselementen T₁₋₁, T₁₋₃, die jeweils mit dem Dreiwege-Verbindungselement T₁₋₂ verbunden sind;
(e) einem Magnetventil (54), das mit den Dreiwege-Verbindungselementen T₁₋₁, T₁₋₃ verbunden ist und zum Einstellen der Strömungskanäle der Dreiwege-Verbindungselemente T₁₋₁, T₁₋₃ dient; und
(f) einer zweiten Drucksteuervorrichtung (52), die mit dem Magnetventil (54) verbunden ist;
**dadurch gekennzeichnet, dass**
(g) ein Fünfwege-Verbindungselement (80) mit dem Dreiwege-Verbindungselement T₁₋₃ verbunden ist; und
(h) eine dritte Drucksteuervorrichtung (53), eine zweitdimensionale GC-Säule (56), ein Massenanalysator (43) und ein GC-Detektor (70) jeweils mit dem Fünfinrege-Verbindungselement (80) verbunden sind.

6. Analysator nach Anspruch 4 oder 5, welcher ferner eine Vorrichtung (92, 94) zum Einstellen einer Temperatur nur eines erstdimensionalen Säulenabschnitts und/oder nur eines zweitdimensionalen Säulenabschnitts umfasst.

7. Analysator nach einem der Ansprüche 4 bis 6, wobei der GC-Detektor (70) aus einer Gruppe ausgewählt ist, die aus einem FID, einem NPD, einem ECD, einem SCD, einem NCD, einem AED, einem FPD und einem PFPD besteht.

8. Analysator nach Anspruch 5, bei dem der GC-Detektor (70) durch einen Geruchskomponentenanalysator ersetzt ist.

9. Analysator nach Anspruch 3 oder 8, der ferner eine Vorrichtung (92, 94) zum Einstellen einer Temperatur nur eines erstdimensionalen Säulenabschnitts und/oder nur eines zweitdimensionalen Säulenabschnitts umfasst.

## Claims

1. An analyzer having:
(a) a sample-injection port (51) which is equipped with a first pressure-control device;
(b) a first-dimensional GC column (55) which is connected to the sample-injection port (51);
(c) a three-way connecting element T₁₋₂ which is connected to the first-dimensional GC column (55);
(d) three-way connecting elements T₁₋₁, T₁₋₃ which are each connected to the three-way connecting element T₁₋₂ ;
(e) a solenoid valve (54) which is connected to the three-way connecting elements T₁₋₁, T₁₋₃ and is used to adjust the flow channels of the three-way connecting elements T₁₋₁, T₁₋₃; and
(f) a second pressure-control device (52) which is connected to the solenoid valve (54);
**characterised in that**
(g) a three-way connecting element T₂₋₁ is connected to the three-way connecting element T₁₋₃;
(h) a third pressure-control device (53) is connected to the three-way connecting element T₂₋₁;
(i) a three-way connecting element T₂₋₂ is connected to the three-way connecting element T₂₋₁;
(j) a mass-analyzer (43) is connected to the three-way connecting element T₂₋₂; and
(k) a second-dimensional GC column (56) is connected to the three-way connecting element T₁₋₁ and to the three-way connecting element T₂₋₂.

2. An analyzer according to claim 1, which further comprises a device (92, 94) for adjusting a temperature of only a first-dimensional column section and/or of only a second-dimensional column section.

3. An analyzer according to claim 1,
**characterised in that**
the analyzer is an odour-component-analyzer, and
(l) a three-way connecting element T₂₋₃ is arranged between the three-way connecting element T₂₋₂ and the mass-analyzer (43); and
(m) the mass-analyzer (43) and an olfactory device (44) are each connected to the three-way connecting element T₂₋₃.

4. An analyzer according to claim 1, **characterised in that**
(l) a three-way connecting element T₂₋₃ is arranged between the three-way connecting element T₂₋₂ and the mass-analyzer (43); and
(m) the mass-analyzer (43) and a GC detector (70) are each connected to the three-way connecting element T₂₋₃.

5. An analyzer having:
(a) a sample-injection port (51) which is equipped with a first pressure-control device;
(b) a first-dimensional GC column (55) which is connected to the sample-injection port (51);
(c) a three-way connecting element T₁₋₂ which is connected to the first-dimensional GC column (55);
(d) three-way connecting elements T₁₋₁, T₁₋₃ which are each connected to the three-way connecting element T₁₋₂ ;
(e) a solenoid valve (54) which is connected to the three-way connecting elements T₁₋₁, T₁₋₃ and is used to adjust the flow channels of the three-way connecting elements T₁₋₁, T₁₋₃; and
(f) a second pressure-control device (52) which is connected to the solenoid valve (54);
**characterised in that**
(g) a five-way connecting element (80) is connected to the three-way connecting element T₁₋₃; and
(h) a third pressure-control device (53), a second-dimensional GC column (56), a mass-analyzer (43) and a GC detector (70) are each connected to the five-way connecting element (80).

6. An analyzer according to claim 4 or 5, which further comprises a device (92, 94) for adjusting a temperature of only a first-dimensional column section and/or of only a second-dimensional column section.

7. An analyzer according to one of claims 4 to 6, wherein the GC detector (70) is selected from a group consisting of an FID, an NPD, an ECD, an SCD, an NCD, an AED, an FPD and a PFPD.

8. An analyzer according to claim 5, in which the GC detector (70) is replaced by an odour-component-analyzer.

9. An analyzer according to claim 3 or 8 which further comprises a device (92, 94) for adjusting a temperature of only a first-dimensional column section and/or of only a second-dimensional column section.

## Revendications

1. Analyseur, comportant :
(a) un orifice d'injection d'échantillon (51) qui est équipé d'un premier dispositif de commande de pression ;
(b) une colonne GC d'une première dimension (55) qui est raccordée à l'orifice d'injection d'échantillon (51) ;
(c) un élément de raccordement à trois canaux T₁₋₂ qui est raccordé à la colonne GC d'une première dimension (55) ;
(d) des éléments de raccordement à trois canaux T₁₋₁ ,T₁₋₃ qui sont raccordés respectivement à l'élément de raccordement à trois canaux T₁₋₂ ;
(e) une soupape magnétique (54) qui est raccordée aux éléments de raccordement à trois canaux T₁₋₁, T₁₋₃ et sert à régler les canaux d'écoulement des éléments de raccordement à trois canaux T₁₋₁, T₁₋₃ ; et
(f) un second dispositif de commande de pression (52) qui est raccordé
à la soupape magnétique (54) ; **caractérisé en ce que**
(g) un élément de raccordement à trois canaux T₂₋₁ est raccordé à l'élément de raccordement à trois canaux T₁₋₃ ;
(h) un troisième dispositif de commande de pression (53) est raccordé à l'élément de raccordement à trois canaux T₂₋₁ ;
(i) un élément de raccordement à trois canaux T₂₋₂ est raccordé à l'élément de raccordement à trois canaux T₂₋₁ ;
(j) un analyseur de masse (43) est raccordé à l'élément de raccordement à trois canaux T₂₋₂ ; et
(k) une colonne GC d'une seconde dimension (56) est raccordée à l'élément de raccordement à trois canaux T₁₋₁ et à l'élément de raccordement à trois canaux T₂₋₂.

2. Analyseur selon la revendication 1, qui englobe en outre un dispositif (92, 94) de réglage d'une température d'une section de colonne d'une première dimension uniquement et/ou d'une section de colonne d'une seconde dimension uniquement.

3. Analyseur selon la revendication 1,
**caractérisé en ce que**
l'analyseur est un analyseur de composants odorants et **en ce que**
(l) un élément de raccordement à trois canaux T₂₋₃ est disposé entre l'élément de raccordement à trois canaux T₂₋₂ et l'analyseur de masse (43) ; et **en ce que**
(m) l'analyseur de masse (43) et un dispositif olfactif (44) sont reliés respectivement à l'élément de raccordement à trois canaux T₂₋₃.

4. Analyseur selon la revendication 1,
**caractérisé en ce que**
(l) un élément de raccordement à trois canaux T₂₋₃ est disposé entre l'élément de raccordement à trois canaux T₂₋₂ et l'analyseur de masse (43) ; et **en ce que**
(m) l'analyseur de masse (43) et un détecteur GC (70) sont reliés respectivement à l'élément de raccordement à trois canaux T₂₋₃.

5. Analyseur, comportant :
(a) un orifice d'injection d'échantillon (51) qui est équipé d'un premier dispositif de commande de pression ;
(b) une colonne GC d'une première dimension (55) qui est raccordée à l'orifice d'injection d'échantillon (51) ;
(c) un élément de raccordement à trois canaux T₁₋₂ qui est raccordé à la colonne GC d'une première dimension (55) ;
(d) des éléments de raccordement à trois canaux T₁₋₁, T₁₋₃ qui sont raccordés respectivement à l'élément de raccordement à trois canaux T₁₋₂ ;
(e) une soupape magnétique (54) qui est raccordée aux éléments de raccordement à trois canaux T₁₋₁ ,T₁₋₃ et sert à régler les canaux d'écoulement des éléments de raccordement à trois canaux T_{1-1,} T₁₋₃ ; et
(f) un deuxième dispositif de commande de pression (52) qui est
raccordé à la soupape magnétique (54) ;
**caractérisé en ce que**
(g) un élément de raccordement à cinq canaux (80) est raccordé à l'élément de raccordement à trois canaux T₁₋₃ ;
(h) un troisième dispositif de commande de pression (53), une colonne GC d'une seconde dimension (56), un analyseur de masse (43) et un détecteur GC (70) sont raccordés respectivement à l'élément de raccordement à cinq canaux (80).

6. Analyseur selon la revendication 4 ou 5, qui englobe en outre un dispositif (92, 94) de réglage de température d'une section de colonne d'une première dimension uniquement et/ou d'une section de colonne d'une seconde dimension uniquement.

7. Analyseur selon l'une quelconque des revendications 4 à 6, dans lequel le détecteur GC (70) est sélectionné dans un groupe qui est composé d'un FID, d'un NPD, d'un ECD, d'un SCD, d'un NCD, d'un AED, d'un FPD et d'un PFPD.

8. Analyseur selon la revendication 5, dans lequel le détecteur GC (70) est remplacé par un analyseur de composants odorants.

9. Analyseur selon la revendication 3 ou 8, qui englobe en outre un dispositif (92, 94) de réglage d'une température d'une section de colonne d'une première dimension uniquement et/ou d'une section de colonne d'une seconde dimension uniquement.
